# EUROPÄISCHE PATENTSCHRIFT

(11) **EP 0 675 184 B1**
(45) Veröffentlichungstag und Bekanntmachung des Hinweises auf die Patenterteilung: **19.08.1998**
(21) Anmeldenummer: 95104278.7
(22) Anmeldetag: 23.03.1995
(51) Int. Cl.: C09J 5/00, F28D 3/00

(54) **Verklebter Formkörper aus thermoplastischem Polymethacrylat**
Thermoplastic polymethacrylate bonded articles
Pièces collées en polyméthacrylate thermoplastique

(30) Priorität: 31.03.1994 DE 9405515 U
(43) Veröffentlichungstag der Anmeldung: 04.10.1995
(73) Patentinhaber: Röhm GmbH, 64293 Darmstadt (DE)
(72) Erfinder: Blumenschein, Michael, D-64625 Bensheim (DE); Müller, Michael, Dr., D-64625 Bensheim (DE)

(56) Entgegenhaltungen:
- EP-A- 0 336 407
- DE-A- 3 905 066
- NL-A- 8 002 720
- US-A- 4 150 720

## Beschreibung

Die vorliegende Erfindung betrifft das Verkleben von Formkörpern aus extrudierbarem Polymethylmethacrylat (PMMA). Unter PMMA ist dabei ein Sammelbegriff für Polymere aus üblicherweise 85 - 100 Gew.-% Methylmethacrylat und ggf. aus Comonomeren, vorzugsweise niederen Alkylacrylaten, zu verstehen. Typische Formkörper dieser Art sind z.B. Stegmehrfachplatten oder Rohre aus Acrylglas.

Die deutsche Offenlegungsschrift DE-A 25 35 581 beschreibt einen Sonnenenergie-Kollektor bestehend aus einer Stegdoppelplatte und zwei Sammelkammern, die aus extrudiertem Kunststoff hergestellt und durch Lösungsmittel-Kitte miteinander verklebt sind. Die Durchführung der Verklebung ist nicht weiter spezifiziert.

Zur Verklebung von PMMA-Teilen können Lösungsmittel, wie z.B. Mischungen aus Methylenchlorid und Nitromethan, eingesetzt werden. Diese dringen durch Lösen der Polymere in das Material ein. An den Kontaktstellen der zu verklebenden Teile kommt es so zu einer teilweisen Vermengung der Polymere, wodurch nach dem Abdampfen des Lösungsmittels eine feste Verbindung entsteht. Die Klebfugen haben in diesem Fall die PMMA-Zusammensetzung der verklebten Teile. Diese Technik ist insbesondere dann gut anwendbar, wenn sich die Kontaktstellen der zu verklebenden Teile in engen Kontakt bringen lassen und eine gute Paßgenauigkeit aufweisen. Das Lösungsmittel dringt durch die Kapillarwirkung von selbst rasch in die Klebfuge ein und bewirkt in wenigen Sekunden eine standfeste Verbindung, die beim Trocknen allmählich ihre endgültige Festigkeit erlangt. Bei dieser Art der Verklebung ergibt sich der Nachteil, daß es an den Klebestellen, insbesondere bei hoher Belastung, häufig zu Spannungsrissen und Undichtigkeiten kommt.

Eine andere Möglichkeit zur Verklebung von PMMA-Teilen ergibt sich sich durch die Verwendung von PMMA-Kleblacken. Hierbei handelt es sich um eine Lösung von PMMA in einem Lösungsmittel. Die Klebwirkung wird vor allem durch die Vermengung des gelösten PMMAs mit dem PMMA der angelösten, zu verklebenden Teile bewirkt. Nach dem Abdampfen des Lösungsmittels liegen somit Klebfugen vor, in denen die PMMA-Zusammensetzung des PMMA-Kleblackes und der oberflächlich angelösten PMMA-Teile vorhanden sind.

Der Vorteil dieser Klebtechnik liegt darin, daß der Kontakt der zu verklebenden Teile auch an Stellen mit geringerer Paßgenauigkeit oder Unebenheiten durch den Kleblack hergestellt wird. Jedoch dringt der Kleblack weniger leicht in schmale Fugen ein. Auch bei dieser Technik ergibt sich der Nachteil, daß es insbesondere bei hoher Belastung häufig zu Spannungsrissen und Undichtigkeiten kommt, die hier in manchen Fällen durch unvollständige Ausfüllung der Klebfuge entstehen.

Bei einer anderen Verklebungstechnik für PMMA-Teile werden sogenannte Polymerisationsklebstoffe auf PMMA-Basis, wie (z.B. ®ACRIFIX 190, Produktbeschreibung Nr. 391 19, Juni 1993, RÖHM GmbH, Darmstadt) eingesetzt. Dieses sind Lösungen eines Polymers (z.B. eines Acrylharzes) in Methylmethacrylat, das mittels eines Polymerisationsinitiators polymerisiert. Bei dem Polymerisationsinitiator handelt es sich um einen Radikalstarter, z.B. einen UV-Initiator, einen Redox-Initiator oder einen thermisch aktivierbaren Radikalstarter. Der Klebstoff kann in eine V-Nut zwischen die zu verklebenden Teile eingebracht werden, wo er polymerisiert und zu einer besonders festen Verbindung führt. Nach der Polymerisation des Klebers entstehen Klebefugen, deren PMMA-Zusammensetzung in der Regel von der der verbundenen PMMA-Teile abweicht und in denen sich noch Reste des Polymerisationsinitiators nachweisen lassen. Auch die Molekulargewichtsverteilung weicht von derjenigen der verklebten PMMA-Teile meistens deutlich ab.

Bei dieser Art der Verklebung von PMMA-Teilen besteht die Gefahr, daß es häufig, insbesondere bei Belastung, an oder in der Umgebung der Klebestellen zu Spannungsrissen kommt.

Es wurde daher als Aufgabe angesehen, nach einer Verklebungsart für thermoplastisch erzeugbare PMMA-Formteile zu suchen, die es ermöglicht, Undichtigkeiten und Spannungsrisse dauerhaft zu vermeiden. Die Aufgabe wurde erfindungsgemäß gelöst durch einen verklebten Formkörper aus thermoplastisch verarbeitbarem (extrudierbarem) Polymethylmethacrylat, dadurch gekennzeichnet, daß die Klebfuge zwischen den verklebten Flächen als Kleber ein mit dem Material übereinstimmendes PMMA enthält und daß die Ränder der Klebfuge mit Klebwülsten aus PMMA überdeckt sind.

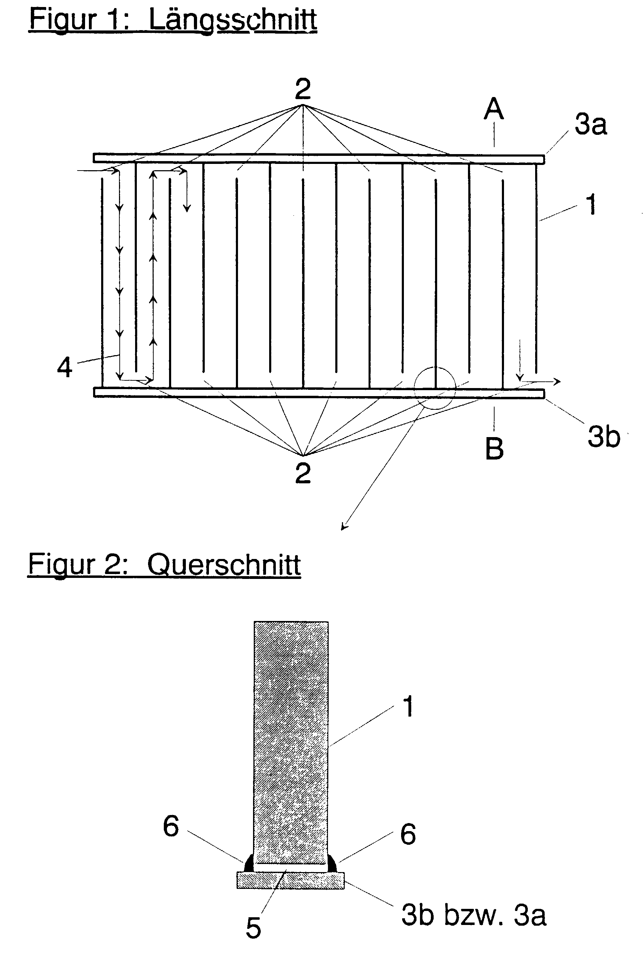

Die Erfindung wird durch die **Figuren 1 und 2** erläutert, ist aber nicht auf die dargestellte Ausführungsform beschränkt.
**Figur 1**: Längsschnitt einer bevorzugten Ausführungsform der Erfindung
**Figur 2**: Teilweise gezeigter Querschnitt der Ausführungsform gemäß Figur 1 in vergrößertem Maßstab.

Überraschenderweise wurde gefunden, daß die Nachteile der Lösungsmittelverklebung und derjenigen der Verklebung mittels Kleblacken oder Polymerisationsklebern bei PMMA nicht auftreten, wenn die erfindungsgemäße Kombination beider Klebe-Techniken angewendet wird. Dadurch ist es möglich, dauerhafte und belastbare Verbindungen von PMMA-Teilen zu erhalten, bei denen auch nach längerer Zeit selbst unter Wassereinwirkung und Druckbelastung keine Rißbildung auftritt.

Die vorliegende Erfindung ist insbesondere bei durch Druck - oder Zugkräfte belasteten PMMA-Elementen oder -Bauteilen anwendbar, z.B. für flüssigkeitsdurchströmte Solarkollektor-Elemente.

Die Erfindung kann wie folgt ausgeführt werden:
Man bringt die zu verklebenden PMMA-Elemente so in Kontakt, daß ein verklebbare Fuge von nicht mehr als ca. 0,2 mm Abstand entsteht, in der sich ein Lösungsmittelkleber mittels der Kapillarkräfte gut verteilen kann.

An den Rändern der Kontaktstelle bringt man den Lösungsmittelkleber vorzugsweise mittels einer Pipette oder Spritze oder einem ähnlichen Hilfsmittel so auf, daß sich dieser aufgrund der Kapillarkräfte in den Klebspalt eindringt und diesen möglichst vollständig benetzt. Vorzugsweise verwendet man einen Methylenchlorid-freien Lösungsmittelkleber, z.B. eine Mischung aus Nitromethan und Ethylformiat, die sich besonders gut kapillar verteilt und das PMMA-Material nur minimal anquillt. Nach dem Aufbringen des Lösungsmittelklebers läßt man die Klebefuge durch Verdunsten des Lösungsmittels aushärten.

Die Zeit bis zum Aushärten der Verklebung ist abhängig vom verklebten Material, dem verwendeten Lösungsmittelkleber, der Art der Kontaktstelle und den Umgebungsbedingungen. Unter üblichen Laborbedingungen ist dies erfahrungsgemäß nach ca. 1 bis 2 Tagen der Fall.

Nach dem Aushärten der ersten Klebeverbindung kann nun ein PMMA-Polymerisationskleber auf die Klebefuge aufgebracht werden. Dies erfolgt an wenigstens einer Außenseite der Klebefuge in Form eines die Klebefuge überdeckenden Wulstes oder einer Raupe.

Nach vollständiger Polymerisation durch den im Polymerisationskleber vorhandenen Polymerisationsinitiator, liegt ein belastbarer, nicht zu Spannungsrissen neigender PMMA-Formkörper gemäß Anspruch 1 vor.

### Beispiel:

Erzeugung eines flüssigkeitsdurchströmbaren Formkörpers mittels dauerhafter Verklebung einer Stegmehrfachplatte mit teilweise durchbrochenen Stegen mit zwei PMMA-Abschlußteilen (siehe Figur 1, Längsschnitt)

Im vorliegenden Beispiel wird eine Stegmehrfachplatte (1) verwendet, deren Stege teilweise durch Ausbrechen oder Ausfräsen unterbrochen wurden (2), so daß nach dem teilweisen Verschließen der Stimseiten ein flüssigkeitsdurchströmbarer Formkörper entsteht. Ein möglicher Flüssigkeitsdurchströmungsweg (4) ist in Figur 1 angedeutet.

An der Stegmehrfachplatte (1) aus PMMA mit den Maßen 1200 mm x 400 mm x 32 mm (Länge x Breite x Dicke) werden mechanisch zwei PMMA-Streifen (3a bzw. 3b) mit den Maßen 1250 mm x 45 mm x 5 mm (Länge x Breite x Dicke) fixiert, so daß die Ränder der PMMA-Streifen gleichmäßig überstehen.

Nun wird an den Kontaktstellen (Figur 2, Querschnitt (5)) zwischen Streifen und Stegmehrfachplatte der Lösungsmittelkleber mittels einer Spritze mit dünner Kanüle gleichmäßig so aufgetragen, daß er über die gesamte Kontaktfläche kapillar benetzend eindringt. Die fixierten Teile werden nun für 24 Stunden bei Raumtemperatur belassen.

Danach wird der PMMA-Polymerisationskleber ®ACRIFIX 190 als Raupe außen auf die Kontaktstellen aufgebracht (6). Nach einer Aushärtungszeit von 3 Stunden bei Raumtemperatur kann der Formkörper zusätzlich für 2 bis 4 Stunden bei 70 bis 80 Grad C getempert werden. Wahlweise kann auch ein lichthärtender Polymerisationskleber wie z.B. ®ACRIFIX 192 verwendet werden.

Der entstandene Hohlkörper wurde an ein flüssigkeitführendes System mit 2 bar Überdruck angeschlossen und 6 Monate unter Außenwitterungsbedingungen belassen.

Undichtigkeiten oder Rißbildungen konnten im Gegensatz zu andersartig verklebten Tesfformkörpem im Testzeitraum nicht festgestellt werden.

## Patentansprüche

1. Verklebter Formkörper aus thermoplastisch verarbeitbarem (extrudierbarem) Polymethylmethacrylat (PMMA), dadurch gekennzeichnet, daß die Klebfuge (5) zwischen den verklebten Flächen als Kleber ein mit dem verklebten Material übereinstimmendes PMMA enthält und daß die Ränder der Klebfuge mit Klebewülsten (6) aus PMMA überdeckt sind, die eine vom restlichen Formkörper unterscheidbare Molekulargewichtsverteilung des PMMA aufweisen.

2. Verklebter Formkörper nach Anspruch 1, dadurch gekennzeichnet, daß die Klebewülste aus PMMA (6) Reste eines Polymerisationsinitiators aufweisen.

3. Verklebter Formkörper nach Anspruch 2, dadurch gekennzeichnet, daß es sich um eine Stegmehrfachplatte (1) handelt, die an den Stirnseiten mit PMMA-Streifen (3a, 3b) zumindest teilweise verschlossen ist.

4. Verklebter Formkörper nach Anspruch 3, dadurch gekennzeichnet, daß es sich um eine Stegmehrfachplatte handelt, deren Stege so unterbrochen sind (2), daß diese flüssigkeitsdurchströmbar ist.

5. Verfahren zur Herstellung eines Formkörpers aus mindestens zwei Teilen aus Polymethylmethacrylat (PMMA) durch kombiniertes Verkleben einer Klebefuge (5) mittels eines Lösungsmittelklebers und eines PMMA-Polymerisationsklebers.

6. Verfahren nach Anspruch 5, dadurch gekennzeichnet, daß die Klebestelle zunächst mit dem Lösungsmittelkleber verklebt wird und nach dem Aushärten der ersten Klebeverbindung anschließend der PMMA-Polymerisationskleber an wenigstens einer der Außenseiten der Klebefuge in Form eines die Klebefuge (5) überdeckenden Wulstes oder einer Raupe (6) aufgebracht wird.

7. Verfahren nach Anspruch 5 oder 6, dadurch gekennzeichnet, daß als Lösungsmittelkleber eine Mischung aus Nitromethan und Ethylformiat verwendet wird.

8. Verwendung eines Lösungsmittelklebers in Kombination mit einem PMMA-Polymerisationskleber zur Herstellung von verklebten Formkörpern.

## Claims

1. Adhesively bonded moulding of thermoplastically workable (extrudable) polymethyl methacrylate (PMMA), characterised in that the adhesive joint (5) between the bonded surfaces contains, as the adhesive, a PMMA which is the same as the material being bonded and that the edges of the adhesive joint are covered by adhesive beads (6) of PMMA which have a molecular weight distribution of the PMMA which can be distinguished from the rest of the moulding.

2. Adhesively bonded moulding according to claim 1, characterised in that the adhesive beads of PMMA (6) contain residues of a polymerisation initiator.

3. Adhesively bonded moulding according to claim 2, characterised in that it is a multiple web plate (1) which is at least partly closed off at the end faces with PMMA strips (3a, 3b).

4. Adhesively bonded moulding according to claim 3, characterised in that it is a multiple web plate the webs of which are interrupted (2) so that liquid can flow through it.

5. Process for producing a moulding from at least two components made of polymethyl methacrylate (PMMA) by combined bonding of an adhesive joint (5) using a solvent adhesive and a PMMA polymerisation adhesive.

6. Process according to claim 5, characterised in that the point of adhesion is first bonded with a solvent adhesive and after the first adhesive bond has cured the PMMA polymerisation adhesive is then applied to at least one of the outer sides of the adhesive joint in the form of a bead or ribbon (6) covering the adhesive joint (5).

7. Process according to claim 5 or 6, characterised in that a mixture of nitromethane and ethyl formate is used as the solvent adhesive.

8. Use of a solvent adhesive in conjunction with a PMMA polymerisation adhesive for producing adhesively bonded mouldings.

## Revendications

1. Pièces collées en polyméthacrylate de méthyle (PMMA) transformable thermoplastiquement (extrudable),
caractérisées en ce que
le joint de colle 5 entre les surfaces à coller contient comme adhésif un PMMA compatible avec le matériau à coller et qu'on recouvre les bords du joint de colle de bourrelets adhésifs (6) en PMMA, qui présentent une répartition de poids moléculaires du PMMA différente de celle du reste des pièces collées.

2. Pièces collées selon la revendication 1,
caractérisées en ce que
les bourrelets de colle en PMMA (6) présentent des restes d'un initiateur de polymérisation.

3. Pièces collées selon la revendication 2,
caractérisées en ce qu'
il s'agit d'une plaque à entretoises multiples (1) qui est obturée au moins partiellement sur les faces frontales avec des bandes en PMMA (3a, 3b).

4. Pièces collées selon la revendication 3,
caractérisées en ce qu'
il s'agit d'une plaque à entretoises multiples dont les entretoises sont interrompues (2) de façon à ce qu'elles puissent être balayées par un liquide.

5. Procédé de fabrication de pièces collées, constitué d'au moins deux pièces en polyméthacrylate de méthyle (PMMA) par collage combiné d'un joint de collage (5) au moyen d'un adhésif à solvant et d'un adhésif polymérisant de PMMA.

6. Procédé selon la revendication 5,
caractérisé en ce qu'
on colle d'abord la zone de collage avec l'adhésif à solvant et qu'ensuite, après durcissement de la première liaison collée, on dépose l'adhésif polymérisant de PMMA sur au moins une face externe du joint de colle (5) sous forme d'un bourrelet recouvrant le joint de colle (5) ou d'un cordon (6).

7. Procédé selon la revendication 5 ou 6,
caractérisé en ce qu'
on utilise comme adhésif à solvant un mélange de nitrométhane et de formiate d'éthyle.

8. Utilisation d'un adhésif à solvant en combinaison avec un adhésif polymérisant de PMMA pour produire des pièces collées.
